# EUROPÄISCHE PATENTSCHRIFT

(11) **EP 1 804 040 B1**
(45) Veröffentlichungstag und Bekanntmachung des Hinweises auf die Patenterteilung: **05.05.2010**
(21) Anmeldenummer: 06022185.0
(22) Anmeldetag: 24.10.2006
(51) Int. Cl.: G01K 17/06

(54) **Verfahren zum Betrieb mehrerer elektronischer Heizkostenverteiler**
Method for operating a plurality of electronic heat cost allocators
Procédé destiné au fonctionnement de plusieurs répartiteurs électroniques de coûts de chauffage

(30) Priorität: 03.01.2006 DE 102006000806
(43) Veröffentlichungstag der Anmeldung: 04.07.2007
(73) Patentinhaber: ista International GmbH, 45131 Essen (DE)
(72) Erfinder: Mügge, Günter, Dr., 48159 Münster (DE); Gladen, Christoph, 48161 Münster (DE); Dicke, Achim, 45219 Essen (DE)
(74) Vertreter: Cohausz, Helge B.

(56) Entgegenhaltungen:
- WO-A-97/22863
- DE-A1- 3 110 393
- DE-A1- 3 310 238
- DE-A1- 3 406 309
- DE-A1- 19 641 324
- US-A- 5 646 858

## Beschreibung

Die Erfindung betrifft ein Verfahren zum Betrieb elektronischer Heizkostenverteiler, insbesondere eines Netzwerkes mit mehreren elektronischen Heizkostenverteilern, die untereinander und/oder mit einer zentralen Erfassungseinheit, insbesondere über Funk, zur Übertragung von registrierten Verbrauchsdaten kommunizieren.

Im Stand der Technik ist es allgemein bekannt, zur Registrierung, d.h. Erfassung und Speicherung von Verbrauchsdaten elektronische Heizkostenverteiler zu betreiben, z.B. einzeln und autark oder als ein Netzwerk, ein so genanntes Sensornetzwerk, mit mehreren elektronischen Heizkostenverteilern.

Hierbei ist üblicherweise ein elektronischer Heizkostenverteiler einem Heizkörper in einer Wohneinheit zugeordnet, um den Wärmeverbrauch an diesem Heizkörper zu erfassen und zu speichern. Heizkostenverteiler, die keine Kommunikationsmöglichkeit nach außen umfassen, werden dabei durch Ablesepersonal jeweils einzeln abgelesen, insbesondere zum Ende einer Abrechnungsperiode.

Sind elektronische Heizkostenverteiler in einem Netzwerkverbund angeordnet, so kann es vorgesehen sein, dass derartige Heizkostenverteiler untereinander und/oder mit einer zentralen Erfassungseinheit kommunizieren, um die in einem jeden Heizkostenverteiler registrierten Verbrauchsdaten für eine Auswertung und Abrechnung weiterzuleiten.

Diese Weiterleitung kann z.B. an eine zentrale Erfassungseinheit erfolgen, an der die Verbrauchsdaten einer Wohneinheit durch das Servicepersonal einer Abrechnungsfirma abgelesen werden kann.

Allgemein wird unter dem Begriff des Ablesens nicht lediglich ein optisches Ablesen, sondern gegebenenfalls auch ein elektronisches Ablesen der Verbrauchsdaten verstanden.

Es ist weiterhin bekannt, dass elektronische Heizkostenverteiler eine Registrierung der Wärmeabgabe an einem Heizkörper üblicherweise in Abhängigkeit von einer Zählbedingung starten.

Dies ist bei so genannten Einfühlerheizkostenverteilern das Überschreiten einer bestimmten Heizkörperoberflächentemperatur, wie beispielsweise 28 Grad Celsius, und bei so genannten Zweifühlerheizkostenverteilern das Überschreiten einer Differenz zwischen einer erfassten Heizkörper- und Raumlufttemperatur, wobei eine derartige Differenz üblicherweise 5 Kelvin betragen kann.

Hierbei ergibt sich die Problematik, dass diese vorgenannten Bedingungen nicht nur während des Heizbetriebs im Winter erreicht werden, sondern gegebenenfalls auch bei sommerlichen Temperaturverhältnissen, so dass auch im Sommer eine Zählung erfolgen kann, nämlich beispielsweise dann, wenn die Temperatur im Raum und damit auch die Heizkörperoberflächentemperatur insgesamt über der Zählbeginntemperatur liegt bzw. aufgrund instationärer Effekte die Heizkörpertemperatur mehr als den vorgenannten Differenzwert über der Raumlufttemperatur liegt.

Eine derartige Sommerzählung führt somit zu einer Verfälschung der Heizkostenabrechnung und somit häufig zu Akzeptanzproblemen.

Um dieses Problem zu umgehen, ist es bereits im Stand der Technik bekannt, elektronische Heizkostenverteiler kalendergesteuert arbeiten zu lassen, also beispielsweise derart, dass in den Sommermonaten eine Zählung von Verbrauchsdaten grundsätzlich nicht erfolgt. Auch eine derartige Lösung ist jedoch unakzeptabel, da gegebenenfalls selbst in den Sommermonaten gelegentlich kalte Tage auftreten können, in denen ein Heizbetrieb erfolgt. Bei einer solchen kalendergesteuerten Lösung würde somit der Heizwärmeverbrauch an diesen Tagen nicht erfasst werden.

Ebenso können in den Übergangsmonaten, wie beispielsweise Mai und September, sehr warme Tage vorkommen, so dass die erhöhte Temperatur am Heizkörper eine Zählung auslöst, ohne dass tatsächlich geheizt würde.

US 5 646 858, DE 3 406 309, DE 3 110 393, DE 3 310 238 und DE 19 641 324 sind Beispiel von bekannten Heizkostenverteilern.

Die Druckschrift EP 0 882 220 offenbart eine weitere Möglichkeit, eine Sommerzählung infolge geringfügiger Temperaturunterschiede zwischen Heizkörper und Raum dadurch auszugleichen, dass eine Aufintegration der Temperaturdifferenzen je nach Vorzeichen in zwei unterschiedlichen Registern erfolgt, die zyklisch gegeneinander abgeglichen werden. Eine Kompensation der Sommerzählung ist mit dieser Maßnahme jedoch nur bedingt möglich. Die an warmen Tagen ohne Heizbetrieb erfolgende Wärmeeinspeicherung in den Heizkörper und die später wieder erfolgende Wärmeabgabe werden in der Regel mit unterschiedlichen Wärmeübergangskoeffizienten zwischen Heizkörper und Heizkostenverteiler erfolgen, so dass die in den beiden Registern aufintegrierten Werte abweichen werden.

Aufgabe der Erfindung ist es, ein Verfahren zum Betrieb von Heizkostenverteilern und/oder eines Netzwerkes mit mehreren elektronischen Heizkostenverteilern sowie auch Heizkostenverteiler und ein Netzwerk zur Verfügung zu stellen, mit denen zuverlässig eine fälschliche Sommerzählung vermieden wird.

Diese Aufgabe wird durch den Gegenstand des Anspruchs 1 gelöst. Erfindungsgemäß wird an insbesondere alle Heizkostenverteiler, gegebenenfalls nur einige der in einer Liegenschaft eingesetzten Heizkostenverteiler, eine Information über den Betriebszustand einer Heizungsanlage übermittelt und erfindungsgemäß erfolgt eine Registrierung von Verbrauchsdaten in einem Heizkostenverteiler in Abhängigkeit dieser Information. So kann unter Zugrundelegung einer derartigen Information über den Betriebszustand einer Heizungsanlage eine fehlerhafte Registrierung bei einer abgeschalteten Heizungsanlage vermieden werden.

Der Erfindung liegt die wesentliche Erkenntnis zugrunde, dass in den Sommermonaten üblicherweise eine Heizungsanlage nicht oder nur sporadisch betrieben wird. Bei einem Nichtbetrieb der Heizungsanlage in den Sommermonaten kann somit durch Auswertung einer Information über den Betriebszustand, d.h. die Einschaltung bzw. Ausschaltung der Heizungsanlage, eine Registrierung von Verbrauchsdaten bei ausgeschalteter Heizungsanlage verhindert werden.

So wird es gemäß der Erfindung vorgesehen sein, dass eine Registrierung von Verbrauchsdaten in den einzelnen elektronischen Heizkostenverteilern nicht erfolgt, wenn diesen Heizkostenverteilern eine Information darüber vorliegt, dass die Heizungsanlage abgeschaltet ist. Hierunter ist auch zu verstehen, dass in einer gesamten Heizungsanlage nur ein einzelner Heizkreis abgeschaltet ist.

So können dann im abgeschalteten Zustand der Heizungsanlage zwar trotzdem durch gegebenenfalls Sonneneinflüsse die eingangs erwähnten Startbedingungen für Heizkostenverteiler erreicht werden, diese führen jedoch nicht zu einer Registrierung von Verbrauchsdaten, da den Heizkostenverteilern eine Information darüber vorliegt, dass die Heizungsanlage abgeschaltet ist und insofern tatsächlich der Anlage keine Wärmeenergie entzogen wird.

Liegt hingegen den einzelnen Heizkostenverteilern eine Information darüber vor, dass die Heizungsanlage in Betrieb ist, so wird nach Erreichen der Startbedingungen jeder der betroffenen Heizkostenverteiler eine Registrierung der Verbrauchsdaten vornehmen, da nunmehr tatsächlich Wärmeenergie der Heizungsanlage entnommen wird.

Gemäß der Erfindung besteht, wie auch eingangs erwähnt, keine zwingende Notwendigkeit, dass die einzelnen elektronischen Heizkostenverteiler untereinander und/oder mit einer zentralen Erfassungseinheit kommunizieren, um das erfindungsgemäße Verfahren durchzuführen. Die Realisierung eines Sensornetzwerkes ist somit nicht zwingend erforderlich.

Die Erfindung ist auch anwendbar bei Heizkostenverteilern, bei denen noch eine direkte Ablesung der erfassten Verbrauchsdaten durch Ablesepersonal an einem jeden Heizkostenverteiler erfolgt. Auch bei solchen elektronischen Heizkostenverteilern ist es gemäß der Erfindung vorgesehen, eine Information über den Betriebszustand einer Heizungsanlage zu übermitteln.

Besonders bevorzugt wird das erfindungsgemäße Verfahren jedoch eingesetzt bei mehreren elektronischen Heizkostenverteilern, insbesondere in einer abgeschlossenen Liegenschaft, die untereinander und/oder mit einer zentralen Erfassungseinheit kommunizieren und die somit ein Netzwerk, bzw. Sensornetzwerk bilden.

Die Kommunikation in einem Netzwerk kann beispielsweise kabelgebunden oder bevorzugt über Funk erfolgen, wofür die einzelnen Heizkostenverteiler gemäß eines vorgegebenen Übertragungsprotokolls so genannte Funktelegramme versenden. Ein solches Funktelegramm kann neben gegebenenfalls vorhandenen Synchronisationsdaten, um den Datenaustausch zu koordinieren, auch die Verbrauchsdaten umfassen, die an einem Heizkostenverteiler registriert wurden. Die Art und Weise der Kommunikation der Heizkostenverteiler in einem Netzwerk ist dem Fachmann bekannt.

In einer bevorzugten Ausführung der Erfindung kann es vorgesehen sein, dass eine Übermittlung der vorgenannten Information über den Betriebszustand einer Heizungsanlage an einen Heizkostenverteiler von einer Sendevorrichtung aus erfolgt. Hierbei kann die Übermittlung auf direktem Wege zwischen der vorgesehenen Sendevorrichtung und einem betrachteten Heizkostenverteiler erfolgen oder gegebenenfalls auch auf indirektem Wege über weitere Heizkostenverteiler. So kann insbesondere eine Weiterleitung der Informationen zwischen den einzelnen Heizkostenverteilern erfolgen. Eine solche Übermittlung kann unabhängig von einem eventuellen Netzwerkverbund der Heizkostenverteiler kabelgebunden (elektrisch oder optisch) oder per Funk erfolgen.

In der besonders bevorzugten Ausgestaltung, bei der die elektronischen Heizkostenverteiler ein Sensornetzwerk bilden und über Funk miteinander kommunizieren, um registrierte Verbrauchsdaten auszutauschen, kann es vorgesehen sein, dass auch die Übermittlung der Informationen über den Betriebszustand einer Heizungsanlage über Funk erfolgt.

So kann hier gegebenenfalls die bereits in den einzelnen Heizkostenverteilern bzw. dem durch die mehreren Heizkostenverteiler realisierten Netzwerk vorgegebene Infrastruktur zur funkgebundenen Datenübertragung verwendet werden, um auch die Informationen über den Betriebszustand unter den Heizkostenverteilern zu kommunizieren.

Hierbei kann ebenso eine direkte Funk-Verbindung zwischen einem Heizkostenverteiler und einer Sendevorrichtung sowie auch eine indirekte Funk-Verbindung von einer Sendevorrichtung zu einem Heizkostenverteiler über weitere zwischengeschaltete Heizkostenverteiler erfolgen. Insbesondere kann hierbei eine Sendevorrichtung selbst durch einen Heizkostenverteiler gebildet werden. Insbesondere kann auch jeder der Heizkostenverteiler eine Sendevorrichtung im Sinne der Erfindung bilden.

Gemäß der Erfindung kann es vorgesehen sein, dass die Information über den Betriebszustand einer Heizungsanlage von der Heizungsanlage selbst zur Verfügung gestellt wird, beispielsweise von einer Steuereinrichtung, mittels der die Heizungsanlage gesteuert und/oder geregelt wird. Hierbei kann es vorgesehen sein, dass beispielsweise die Sendevorrichtung die benötigte Information aus der Steuereinrichtung abfragt, gegebenenfalls kann es auch vorgesehen sein, dass standardmäßig diese Information an die Sendevorrichtung zur Verfügung gestellt wird. Um diese Möglichkeiten zu realisieren, kann es beispielsweise vorgesehen sein, dass die Sendevorrichtung über eine Schnittstelle zur Übermittlung einer solchen Information über den Betriebszustand mit der Heizungsanlage und/oder einer die Heizungsanlage steuernden/regelnden Vorrichtung verbunden ist.

Die somit beispielsweise aus einer Steuerung der Heizungsanlage erhaltene Information über den Betriebszustand, also z.B. die Ein- bzw. Ausschaltung der Heizungsanlage kann als Information an die einzelnen Heizkostenverteiler weiter kommuniziert werden, damit diese Heizkostenverteiler in Abhängigkeit der vorliegenden Information eine Verbrauchsdatenregistrierung durchführen können.

In einer anderen Ausführung kann es ebenso vorgesehen sein, dass die benötigte Information über den Betriebszustand einer Heizungsanlage, sofern sie nicht durch die Anlage selbst zur Verfügung gestellt wird, gewonnen wird, beispielsweise von einer Detektorvorrichtung, insbesondere die von der Sendevorrichtung umfasst sein kann, wobei es für das Gewinnen dieser Information vorgesehen sein kann, dass wenigstens ein Betriebsparameter der Heizungsanlage erfasst und/oder ausgewertet wird, insbesondere an wenigstens einer Erfassungsstelle.

Bei einer solchen Erfassungsstelle kann es sich dabei prinzipiell um jede Stelle einer Heizungsanlage handeln, an der ein Parameter erfassbar ist, der auf den Betrieb einer Heizungsanlage zurückschließen lässt.

Bei einem solchen Parameter handelt es sich beispielsweise um die Temperatur der Heizungsanlage , wie z.B. besonders bevorzugt die Vorlauftemperatur.

Es kann somit bei einer Ausführung der Erfindung vorgesehen sein, mittels Temperatursensoren diese Vorlauftemperatur zu erfassen und auszuwerten, um so auf den Betriebszustand der Heizungsanlage schließen zu können. Beispielsweise kann dies erfolgen mittels eines Temperatursensors, der die Vorlaufleitung einer Heizungsanlage überwacht. Bei Überschreiten einer Grenztemperatur kann sodann durch eine Detektorvorrichtung, die auf die Messwerte eines solchen Temperatursensors Zugriff hat, ein Heizbetrieb detektiert werden und sodann über die vorgenannte Sendevorrichtung an die einzelnen Heizkostenverteiler weiterkommuniziert werden.

Neben einer Erfassung an gegebenenfalls nur einer Stelle besteht auch die Möglichkeit, an mehreren Stellen im Rohrleitungsnetz einer Heizungsanlage Temperaturen zu erfassen, wofür gegebenenfalls mehrere Temperatursensoren bzw. Detektorvorrichtungen vorgesehen sein können. Die Messwerte mehrere Temperatursensoren können sodann auch zentral erfasst und ausgewertet werden, um eine Information über den Betriebszustand der Heizungsanlage zu gewinnen.

Um die Temperatur in einer Heizungsanlage der Gewinnung einer Information über den Betriebszustand der Heizungsanlage zugrunde zu legen, wird auch in einer Ausführung der Erfindung als Erfassungsstelle ein oder mehrere Heizkörper, z.B. in einer Wohneinheit einer Liegenschaft gewählt , an dem ein Heizkostenverteiler angeordnet ist.

Information wird sodann gewonnen, aus einer Erfassung und Auswertung der Temperatur wenigstens eines Heizkörpers durch den an diesem Heizkörper angeordneten Heizkostenverteiler, was im Zusammenhang mit dem erfindungsgemäßen Verfahren besonders bevorzugt ist, da üblicherweise Heizkostenverteiler ohnehin Temperatursensoren umfassen. Hierbei kann insbesondere der Vergleich der Temperatur eines Heizkörpers mit der Raumtemperatur herangezogen werden, um auf den Betrieb der Heizungsanlage rückschließen zu können.

Da wie eingangs erwähnt ein Vergleich zwischen Heizkörpertemperatur und Raumtemperatur gegebenenfalls durch externe Einflüsse, wie beispielsweise Sonneneinstrahlung, gegebenenfalls auch durch Einflüsse manipulativer Art nicht korrekt sein kann, ist es erfindungsgemäß vorgesehen, die an einem Heizkörper oder einer Gruppe von Heizkörpern gewonnene Information über den Betriebszustand einer Heizungsanlage zu vergleichen mit einer Information, die an wenigstens einem anderen Heizkörper oder einer anderen Gruppe von Heizkörpern, insbesondere wenigstens eines anderen Nutzers, d.h. bevorzugt in einer anderen Wohneinheit gewonnen wird.

Erst wenn die unabhängig voneinander gewonnenen Informationen, insbesondere wenn sie von Heizkörpern verschiedener Nutzer stammen, ein gleiches Ergebnis bezüglich des Betriebszustandes einer Heizungsanlage liefern, ist es erfindungsgemäß vorgesehen, dass diese Information im Rahmen der Erfindung als zuverlässig eingestuft wird.

Werden hingegen unterschiedliche Informationen erhalten, so kann dies einen Rückschluss darauf zulassen, dass die gewonnene Information über den Betriebszustand nicht korrekt ist, und insbesondere durch eine Manipulation am Heizkostenverteiler entstanden ist. So können durch den Vergleich der an verschiedenen Heizkörpern, insbesondere von verschiedenen Nutzern gewonnenen Informationen Einflüsse ausgeschlossen werden, die durch den Nutzer einer Wohnungseinheit oder auch durch externe Sonneneinflüsse entstehen können.

In einer weiteren Ausführung kann es auch vorgesehen sein, dass die Information über den Betriebszustand einer Heizungsanlage gewonnen wird aus einer Erfassung und Auswertung der Lufttemperatur in einem unbeheizten Raum und/oder der Außentemperatur.

Im Rahmen der Erfindung kann es vorgesehen sein, dass die Temperaturmesswerte zunächst an eine zentrale Auswerteelektronik übertragen werden, die z.B. in der vorgenannten Sendevorrichtung vorgesehen sein kann. Eine derartige Übertragung kann ebenso funkbasiert erfolgen, woraufhin nach der Übermittlung dieser mehreren Temperaturen ein Betriebszustand sicherer erkannt werden kann. Nach einem Erkennen eines Betriebszustands der Heizungsanlage kann sodann wiederum die gewonnene Information an die elektronischen Heizkostenverteiler kommuniziert werden, insbesondere wiederum per Funk oder auf jegliche andere Art und Weise einer Übertragung.

In einer anderen Ausführung der Erfindung kann es auch vorgesehen sein, dass mittels einer Detektorvorrichtung ein jeglicher anderer Betriebsparameter einer Heizungsanlage als eine Temperatur detektiert wird, beispielsweise eine Betriebsspannung einer Vorrichtung der Heizung, wie z.B. einer Pumpe und/oder eines Mischers. Üblicherweise werden derartige Vorrichtungen einer Heizungsanlage nur in Betrieb sein, d.h. mit einer Betriebsspannung versorgt sein, wenn die Heizungsanlage insgesamt in Heizbetrieb ist. Es kann somit auch von Teilkomponenten einer Gesamtheizungsanlage ein entsprechender Parameter erfasst werden, der zur Gewinnung einer Information über den Betriebszustand der Heizungsanlage geeignet ist.

Eine Auswertung des Vorhandenseins bzw. Nichtvorhandenseins einer Betriebsspannung, beispielsweise einer Pumpe oder eines Heizungsmischers oder einer jeglichen anderen Teilvorrichtung einer Heizungsanlage, lässt somit einen Schluss auf den Betrieb der Heizungsanlage zu. Hierbei kann es vorgesehen sein, dass die Betriebsspannungen, die üblicherweise bis zu 230 Volt und gegebenenfalls bei entsprechenden Ansteuerungen auch höher sein können, nicht direkt detektiert werden, sondern indirekt, beispielsweise durch induktive bzw. kapazitive Signalaufnahme.

Es kann auch vorgesehen sein, indirekte Signale zu detektieren, d.h. solche Signale, die erst durch den Betrieb einer Heizungsanlage entstehen. Hierbei kann es sich beispielsweise um Streumagnetfelder handeln, die durch laufende Pumpen erzeugt werden und bei einer stillstehenden Pumpe nicht vorhanden sind. Derartige Magnetfelder können durch entsprechende Magnetfeldsensoren, wie beispielsweise Hallsensoren, detektiert und dann ausgewertet werden.

In einer weiteren bevorzugten Ausführung der Erfindung kann es auch vorgesehen sein, dass eine Information über einen Betriebszustand einer Heizungsanlage, sei diese durch die Heizungsanlage zur Verfügung gestellt oder gegebenenfalls wie vorbeschrieben gewonnen, an die einzelnen Heizkostenverteiler übermittelt wird und bei dieser Übermittlung zu einer Abschaltung der Heizkostenverteiler führt, wobei unter einer Abschaltung hier das Nichtregistrieren von Verbrauchsdaten verstanden wird, selbst wenn eine Startbedingung erreicht wird.

Es kann sodann vorgesehen sein, dass Heizkostenverteiler automatisch nach einer vorgegebenen, gegebenenfalls bei einer Informations-Übermittlung mitübermittelten Zeit automatisch wieder zu registrieren beginnen, wenn nicht erneut eine Information über den Betriebszustand, d.h. hier in eine Information über den Nichtbetrieb der Heizungsanlage übertragen wird.

So kann es gegebenenfalls auch vorgesehen sein, periodisch mit dem erfindungsgemäßen Verfahren Informationen über den Betriebszustand zu übermitteln, sofern diese Information einen Nichtbetrieb der Heizungsanlage kennzeichnet. Geht die Heizungsanlage sodann in Betrieb, so kann es vorgesehen sein, dass die Übermittlung dieser Negativinformation unterbleibt, so dass dann automatisch die einzelnen Heizkostenverteiler nach der vorgebbaren bzw. vorgegebenen Zeit automatisch wieder die Registrierung aufnehmen.

Eine Information über den Betriebszustand einer Heizanlage kann jeglicher Art ausgestaltet sein, z.B. als ein Datenbit, Datenbyte oder Datenwort.

Ein Ausführungsbeispiel der Erfindung ist in der nachfolgenden Figur dargestellt.

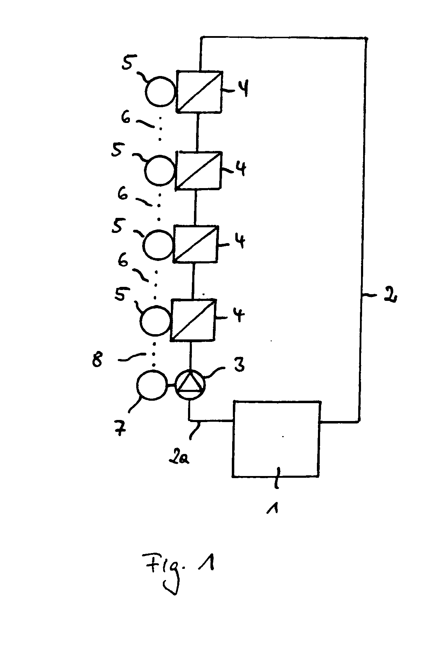

Die Figur 1 zeigt in einer schematischen Übersicht eine Heizungsanlage, beispielsweise eine Zentralheizung eines hier nicht dargestellten Gebäudes mit einem Heizkessel 1, der auf übliche Art und Weise betrieben sein kann, beispielsweise durch Gas- oder Ölbefeuerung, gegebenenfalls auch durch Strombeheizung. Gegebenenfalls kann auch eine Fernwärmebeheizung vorgesehen sein, bei der dann ein Heizkessel durch eine Hausübergabestation ersetzt wäre.

Dargestellt ist hier ein Heizkreislauf des Heizwassers durch die Leitungen 2a und 2, wobei im Vorlauf 2a die Umwälzpumpe 3 zu einem Fördern des Heizwassers durch die einzelnen Heizkörper 4 eingesetzt wird. Diese hier schematisch dargestellten Heizkörper 4 können beispielsweise jeweils einer anderen Wohneinheit in einer Liegenschaft zugeordnet sein, wobei es ebenso vorgesehen sein kann, dass in einer Wohneinheit mehrere Heizkörper 4 angeordnet sein können. Zur schematischen Vereinfachung ist hier jeweils nur ein Heizkörper der hier angenommenen insgesamt vier Wohneinheiten einer Liegenschaft dargestellt. Jedem Heizkörper 4 ist in der Figur 1 ein elektronischer Heizkostenverteiler 5 zugeordnet, mittels dem die Wärmeenergieverbräuche der einzelnen Heizkörper 4 registriert werden können.

Hierbei kann es vorgesehen sein, dass die einzelnen Heizkostenverteiler 5 kabellos untereinander über eine Funkverbindung 6 miteinander kommunizieren können. Diese Funkverbindung ist in der Figur 1 punktiert schematisch dargestellt.

Es besteht so die Möglichkeit, dass die erfassten Verbrauchsdaten zwischen den einzelnen Heizkostenverteilern 5 weiter kommuniziert werden, beispielsweise zu einer hier nicht dargestellten zentralen Erfassungseinheit. Die Organisation eines so gebildeten Funknetzwerkes kann in üblicher dem Fachmann bekannten Weise erfolgen.

Gemäß einer Ausführung der Erfindung kann es hier vorgesehen sein, dass eine Sendevorrichtung 7 gleichzeitig eine Detektorvorrichtung umfasst, mit der der Betriebszustand der Pumpe 3 erfasst werden kann. Somit bietet die Sende- bzw. Detektorvorrichtung 7 die Möglichkeit, z.B. anhand der Betriebsspannung der Pumpe 3 oder auch eines durch den Betrieb der Pumpe 3 erzeugten Magnetfeldes festzustellen, ob die Pumpe 3 in Betrieb ist oder nicht und somit, ob ein Heizbetrieb vorliegt oder nicht, da üblicherweise es ohne einen Heizbetrieb des Heizkessels 1 auch vorgesehen ist, eine Umwälzpumpe 3 abzuschalten.

Die so gewonnene Information über den Betriebszustand der Heizungsanlage kann sodann gemäß der Erfindung ebenso kabellos per Funk über die Funkverbindung 8 zwischen der Sende- bzw. Detektorvorrichtung 7 und zumindest einem ersten Heizkostenverteiler 5 übertragen werden.

Die von dem ersten Heizkostenverteiler 5 empfangene Information über den Betriebszustand kann sodann über die Funkverbindungen 6 weiter kommuniziert werden, bis dass sämtliche Heizkostenverteiler 5 des Netzwerks die benötigte Information erhalten haben.

Bei größeren als dem hier schematisch dargestellten Netzwerk kann es vorgesehen sein, dass ein Heizkostenverteiler 5 die erhaltene Information über den Betriebszustand einer Heizungsanlage nicht nur an einen, sondern gegebenenfalls an mehrere andere Heizkostenverteiler 5 weiterleitet, so dass mit dieser Information das Netzwerk der elektronischen Heizkostenverteiler geflutet wird. Innerhalb kürzester Zeit steht somit die Information über den Betrieb der Heizanlage allen einzelnen elektronischen Heizkostenverteilern 5 des Netzwerkes zur Verfügung.

Die Figur 1 stellt nur eine Möglichkeit der Realisierung des Verfahrens dar und beschränkt die Erfindung nicht. Insbesondere soll darauf hingewiesen werden, dass eine Detektion anderer Betriebsparameter möglich ist, wie beispielsweise der Vorlauftemperatur oder auch der Flamme einer Öl- bzw. Gasheizung.

Die in der Figur 1 dargestellte Sende- bzw. Detektorvorrichtung 7 könnte sodann in Abweichung von der Figur 1 nicht mit der Pumpe 3, sondern gegebenenfalls direkt mit dem Heizkessel 1 oder aber auch mit einer diesem Heizkessel zugeordneten Steuerung verbunden sein.

Wesentlich für sämtliche Ausführungen der Erfindung ist der Gegenstand des Anspruchs 1, d.h., dass die Möglichkeit zur Verfügung gestellt wird, eine Information über den Betriebszustand einer Heizungsanlage, d.h. ob z.B. diese Anlage ein- oder ausgeschaltet ist, an die einzelnen Heizkostenverteiler weiterzuleiten, um sodann eine Registrierung von Verbrauchskosten von der vorliegenden Information über den Betriebszustand abhängig zu machen und so eventuelle falsche Messungen, insbesondere bei einem Sommerbetrieb zu vermeiden.

## Patentansprüche

1. Verfahren zum Betrieb elektronischer Heizkostenverteiler, bei dem an Heizkostenverteiler (5) eine Information über den Betriebszustand einer Heizungsanlage übermittelt wird und eine Registrierung von Verbrauchsdaten in einem Heizkostenverteiler (5) in Abhängigkeit dieser Information erfolgt, **dadurch gekennzeichnet, dass** eine Information über den Betriebszustand gewonnen wird aus einer Erfassung und Auswertung der Temperatur wenigstens eines Heizkörpers oder einer Gruppe von Heizkörpern durch die daran angeordneten Heizkostenverteiler und verglichen wird mit einer Information, die an wenigstens einem anderen Heizkörper oder einer anderen Gruppe von Heizkörpern gewonnen wird und die Information über den Betriebszustand als zuverlässig eingestuft wird, wenn die unabhängig voneinander gewonnenen Informationen im Vergleich ein gleiches Ergebnis liefern.

2. Verfahren nach Anspruch 1, **dadurch gekennzeichnet, dass** die Übermittlung der Information an einen Heizkostenverteiler (5) von einer Sendevorrichtung (7), insbesondere über Funk (6), erfolgt, insbesondere wobei die Sendevorrichtung durch einen der Heizkostenverteiler gebildet werden kann

3. Verfahren nach Anspruch 2, **dadurch gekennzeichnet, dass** eine Weiterleitung der Information zwischen den Heizkostenverteilern (5) erfolgt.

4. Verfahren nach einem der vorherigen Ansprüche, **dadurch gekennzeichnet, dass** die Information von einer Steuereinrichtung der Heizungsanlage zur Verfügung gestellt wird, insbesondere von der Sendevorrichtung aus der Steuereinrichtung abgefragt wird.

## Claims

1. Method of operating electronic heat cost allocators, in which information about the operating state of a heating system is transmitted to heat cost allocators (5) and consumption data is recorded in a heat cost allocator (5) as a function of this information, **characterised in that** information is obtained about the operating state in that the temperature of at least one radiator or a group of radiators is measured and evaluated by the heat cost allocator arranged thereon and compared with information obtained at at least one other radiator or another group of radiators, the information about the operating state being classified as reliable if the two lots of information obtained independently of one another deliver an identical result when they are compared.

2. Method according to claim 1, **characterised in that** the information is transmitted to a heat cost allocator (5) by a transmitting device (7), in particular via radio (6), wherein, in particular, the transmitting device may be formed by one of the heat cost allocators.

3. Method according to claim 2, **characterised in that** the information is relayed between the heat cost allocators (5).

4. Method according to one of the preceding claims, **characterised in that** the information is provided by a controller of the heating system, in particular the transmitting device requesting information from the controller.

## Revendications

1. Procédé d'exploitation de répartiteurs électroniques des coûts de chauffage, dans lequel une information concernant l'état de fonctionnement d'une installation de chauffage est transmise à des répartiteurs des coûts de chauffage et un enregistrement de données de consommation a lieu dans un répartiteur des coûts de chauffage (5) en fonction de ladite information, **caractérisé en ce qu'**une information concernant l'état de fonctionnement est obtenue à partir d'une détection et d'une évaluation de la température d'au moins un radiateur ou d'un groupe de radiateurs par l'intermédiaire des répartiteurs des coûts de chauffage qui y sont disposés, et est comparée à une information qui est obtenue au niveau d'au moins un autre radiateur ou un autre groupe de radiateurs, et l'information concernant l'état de fonctionnement est classifiée comme fiable lorsque les informations obtenues indépendamment les unes des autres fournissent un résultat identique lors de la comparaison.

2. Procédé selon la revendication 1, **caractérisé en ce que** la transmission de l'information à un répartiteur des coûts de chauffage (5) est effectuée à partir d'un dispositif émetteur (7), en particulier par voie hertzienne (6), le dispositif émetteur pouvant en particulier être réalisé par un répartiteur des coûts de chauffage.

3. Procédé selon la revendication 2, **caractérisé en ce qu'**une retransmission de l'information a lieu entre les répartiteurs des coûts de chauffage (5).

4. Procédé selon l'une quelconque des revendications précédentes, **caractérisé en ce que** l'information est fournie par un dispositif de commande de l'installation de chauffage, en particulier en étant consultée par le dispositif émetteur dans le dispositif de commande.
